# EUROPÄISCHE PATENTSCHRIFT

(11) **EP 1 113 848 B1**
(45) Veröffentlichungstag und Bekanntmachung des Hinweises auf die Patenterteilung: **04.06.2003**
(21) Anmeldenummer: 99936611.5
(22) Anmeldetag: 27.07.1999
(51) Int. Cl.: B01D 3/06, C08G 64/40, B01D 19/00

(54) **VERFAHREN ZUM EINDAMPFEN VON POLYMERLÖSUNGEN THERMOPLASTISCHER POLYMERE**
METHOD FOR EVAPORATING POLYMER SOLUTIONS OF THERMOPLASTIC POLYMERS
PROCEDE POUR L'EVAPORATION DE SOLUTIONS POLYMERES DE POLYMERES THERMOPLASTIQUES

(30) Priorität: 07.08.1998 DE 19835744
(43) Veröffentlichungstag der Anmeldung: 11.07.2001
(73) Patentinhaber: Bayer Aktiengesellschaft, 51368 Leverkusen (DE)
(72) Erfinder: ELSNER, Thomas, D-40593 Düsseldorf (DE); HEUSER, Jürgen, D-47803 Krefeld (DE); KOHLGRÜBER, Klemens, D-51515 Kürten (DE); KORDS, Christian, D-47829 Krefeld (DE)
(86) Internationale Anmeldenummer: EP9905368
(87) Internationale Veröffentlichungsnummer: WO00007684

(56) Entgegenhaltungen:
- EP-A- 0 723 029
- DE-A- 3 409 066

## Beschreibung

Die Erfindung betrifft ein mehrstufiges Verfahren zum Eindampfen von Polymerlösungen thermoplastischer Polymere und zum Entfernen flüchtiger Bestandteile aus thermoplastischen Polymeren durch indirekten Wärmeaustausch. Insbesondere bezieht sich die Erfindung auf ein Verfahren zum Ausdampfen von flüchtigen Komponenten aus Polymerlösungen unter Verwendung von Rohrbündelwärmetauschern, Schlangenrohrverdampfern und Strangverdampfern spezieller Geometrie.

Das Entfernen von flüchtigen Komponenten aus einer Polymerlösung ist einer der letzten Verfahrensschritte bei der Herstellung vieler Polymere. Die zu entfernenden flüchtigen Bestandteile können entweder Lösungsmittel und/oder nicht polymerisierte Monomere sein. Abhängig von der Größenordnung der Viskosität der Polymerlösung sind verschiedene Varianten zur Entfernung der flüchtigen Komponenten aus der Polymerlösung bekannt, bei denen jeweils die Polymerlösung über die Verdampfungstemperatur der flüchtigen Bestandteile erhitzt wird. Als Apparate sind z.B. Dünnschichtverdampfer, Extruder und solche mit indirektem Wärmeaustausch bekannt.

Entscheidend ist bei der Erwärmung der Polymerlösung, daß das Polymer nicht thermisch geschädigt wird. Die thermische Schädigung bewirkt unerwünschte Farbveränderungen oder die Anwesenheit von Stippen im Polymer.

So wird in der EP-A-150225 ein Apparat beschrieben, der über zwei in Reihe geschaltete Wärmetauscherpakete verfügt. Die Wärmetauscherpakete weisen horizontal angeordnete rechteckige Kanäle auf, in denen die Polymerlösung entgast wird. Dieser Apparat wird hauptsächlich für das zweistufige Aufheizen oder Kühlen viskoser Polymerlösungen während der Reaktion eingesetzt, ist aber relativ aufwendig in der Fertigung und im Betrieb.

Die EP-B-226204 offenbart ein Verfahren und einen Wärmetauscher zur Entfernung flüchtiger Bestandteile aus einer Polymerlösung mit wenigstens 25-Gew.-% Polymer. Die Polymerlösung wird in einer Zone indirekten Wärmeaustausches erhitzt, die aus einer Vielzahl von Kanälen besteht. Die Kanäle weisen ein im Wesentlichen gleichmäßiges Verhältnis von Oberfläche zu Volumen im Bereich von 0,158 bis 1,97 mm-1, eine Höhe von 1,27 bis 12,7 mm, eine Breite von 2,54 bis 10,16 cm und eine Länge von 1,27 bis 30,48 cm auf. Die Polymerlösung wird in dem Kanälen bei einem Druck von 2-200 bar auf eine Temperatur oberhalb der Verdampfungstemperatur der flüchtigen Komponenten aber unterhalb der Siedetemperatur des Polymeren erhitzt. Die Verweilzeit der Polymerlösung in den Kanälen beträgt 5 bis 120 Sekunden. Nach dem Erhitzen wird die Lösung in eine Kammer überführt, in der mindestens 25% der flüchtigen Bestandteile aus der Lösung ausgasen. Der Prozeß verringert die thermische Schädigung dadurch, daß die Zeit, der das Polymere hohen Temperaturen ausgesetzt wird, verringert worden ist. Das Verfahren hat jedoch den Nachteil, daß eine vollständige Entfernung des Lösungsmittels einstufig nicht möglich ist. Ferner entstehen an der Außenseite des Wärmetauscherpakets Polymerablagerungen, die mit der Zeit verkohlen und gelegentlich abplatzen, so daß das von Lösungsmittel befreite Polymere verunreinigt wird.

Die EP-B-352 727 offenbart einen Prozeß zur Entfernung flüchtiger Bestandteile aus Polymerlösungen, indem die Polymerlösung in einer Vielzahl parallel geschalteter Kanäle auf eine Temperatur oberhalb der Verdampfüngstemperatur der flüchtigen Komponenten erhitzt wird. Das Verhältnis von Wärmeaustauschfläche zu Produktvolumenstrom ist >80m²/m³/h. Die Strömungsgeschwindigkeit in den Kanälen ist <0,5 mm/s und die Verweilzeit der Polymerlösung in den Kanälen beträgt 120 bis 200 Sekunden. Auch dieses Verfahren hat den Nachteil, daß eine vollständige Entfernung des Lösungsmittels einstufig nicht möglich ist. Ferner entstehen an der Außenseite des Wärmetauscherpakets Polymerablagerungen, die mit der Zeit verkohlen und gelegentlich abplatzen, so daß das von Lösungsmittel befreite Polymere verunreinigt wird.

Aus der Offenlegungsschrift EP-A-451602 ist ein Verfahren zum Aufkonzentrieren von Polymerlösungen bekannt, bei dem die vorerhitzte Lösung gedrosselt in ein gewendeltes Strömungsrohr entspannt wird und die konzentrierte Lösung in einem zweiten direkt nachgeschalteten Trockenapparat mit selbstreinigenden Elementen weiter aufkonzentriert wird. Das Verfahren hat den Nachteil, daß die Endkonzentration an Lösungsmittel im Polymer noch vergleichsweise hoch ist und daß die Verweilzeit in dem nachgeschalteten Trockenapparat zu lang ist. An den Innenwänden des Wendelrohres können sich Polymerpartikel festsetzen, die die Produktqualität vermindern.

Aufgabe dieser Erfindung ist es, ein Verfahren zur Entfernung von flüchtigen Komponenten aus einer Polymerlösung zur Verfügung zu stellen, das die Nachteile der aus dem Stand der Technik bekannten Verfahren nicht aufweist.

Diese Aufgabe konnte mit der Ausarbeitung und Bereitstellung des nachstehend näher beschriebenen erfindungsgemäßen Verfahrens gelöst werden.

Gegenstand der Erfindung ist ein mehrstufiges kontinuierliches Verfahren zum Eindampfen von Polymerlösungen, insbesondere thermoplastischer Polymere, durch indirekten Wärmeaustausch unter Durchleitung der Polymerlösung durch Rohrbündelwärmetauscher, mit nachgeschaltetem Abscheider, dadurch gekennzeichnet, daß
A) in einer ersten Stufe, in einem oder mehreren einzelnen Schritten die Polymerlösung mit einem Polymeranteil von 5 bis 20 Gew.-% in einer Kombination aus einem Rohrbündelwärmetauscher und einem Dünnschichtverdampfer oder einem Schlangenrohrverdampfer oder in einem Rohrbündelwärmetauscher jeweils mit nachgeschaltetem Abscheider bei einer Temperatur von 150 bis 250°C auf 60 bis 75 Gew.-% aufkonzentriert wird, wobei der Druck im Abscheider von etwa 0,1 bis 0,4 MPa beträgt, bevorzugt Umgebungsdruck (d.h. etwa 0,1 MPa),
B) in einer weiteren Stufe die Polymerlösung in einem Rohrbündelwärmetauscher mit nachgeschaltetem Abscheider bei einer Temperatur von 250 bis 350°C von 60 bis 75 Gew.-% auf mindestens 95 Gew.-%, insbesondere auf 98 bis 99,9 Gew.-% aufkonzentriert wird, wobei der Rohrbündelwärmetauscher vertikale, beheizte gerade Rohre mit oder ohne eingebaute statische Mischer mit einem inneren Durchmesser von 5 bis 30 mm, vorzugsweise von 5 bis 15 mm, einer Länge von 0,5 bis 4 m, bevorzugt von 1 bis 2 m aufweist und der Durchsatz je Wärmetauscherrohr durch die Rohre 0,5 bis 10 kg/h, bevorzugt 3 bis 7 kg/h beträgt, bezogen auf das Polymer und wobei der Druck im Abscheider von 0,5 kPa bis 0,1 MPa, insbesondere von 3 kPa bis 0,1 MPa, bevorzugt von 3 kPa bis 10 kPa beträgt,
C) in einer weiteren Stufe die Reste von Lösungsmittel und/oder anderen flüchtigen Komponenten enthaltende Polymer in einem weiteren Rohrbündelwärmetauscher mit nachgeschaltetem Abscheider oder in einem Strangverdampfer bei einer Temperatur von 250 bis 350°C auf einen Gehalt an Lösungsmittel und/oder anderen flüchtigen Komponenten von 5 bis 500 ppm aufkonzentriert wird, wobei der Rohrbündelwärmetauscher vertikale, beheizte gerade Rohre mit einem inneren Durchmesser von 5 bis 30 mm, vorzugsweise von 10 bis 20 mm, einer Länge von 0,2 bis 2 m, bevorzugt von 0,5 bis 1 m aufweist und der Durchsatz je Wärmetauscherrohr durch die Rohre 0,5 bis 10 kg/h, bevorzugt 3 bis 7 kg/h beträgt, bezogen auf das Polymer und wobei der Druck im Abscheider von 50 Pa bis 0,1 MPa, bevorzugt 0,1 kPa bis 2 kPa beträgt, und
D) daß das entgaste Polymer anschließend isoliert und ggf. granuliert wird.

Bevorzugt ist ein Verfahren, bei dem die erste Stufe in einem Rohrbündelwärmetauscher durchgeführt wird, der Wärmetauscherrohre für die Polymerlösung mit einem inneren Durchmesser von 5 bis 30 mm, vorzugsweise von 15 bis 25 mm und mit einer Länge von 0,5 bis 5 m, bevorzugt von 3 bis 4 m aufweist und wobei der Durchsatz durch die Wärmetauscherrohre je Rohr 0,5 bis 10 kg/h, bevorzugt 0,5 bis 3 kg/h bezogen auf das Polymer beträgt.

Besonders bevorzugt wurde eine Kombination aus Wärmaustauscher und Schlangenrohrverdampfer in der Stufe A eingesetzt.

Die Restentgasung in der dritten Stufe C erfolgt vorzugsweise in einem Strangverdampfer. Unter Strangverdampfer wird hier eine Vorrichtung verstanden, in der das Polymer aufgeheizt und durch eine Lochplatte oder einen Rohrverteiler mit einer Vielzahl von Löchern in einen Verdampfungsraum ausgetrieben wird. Die Austrittsöffnungen sind hierbei so angeordnet, daß sich der Schwerkraft folgend frei fallende bzw. abfließende Stränge von Polymermaterial bilden, aus denen das Polymerlösungsmittel verdampft. Das entgaste Polymer wird dann am Boden des Strangverdampfers z.B. über eine großmaulige Zahnradpumpe ausgetragen. Die Löcher haben insbesondere einen Durchmesser von 0,5 bis 4 mm. Der Durchsatz je Bohrung beträgt vorzugsweise 10 bis 1 000 g/h.

Das erfindungsgemäße Verfahren kann zur Entfernung von flüchtigen Komponenten aus Lösungen beliebiger flüssiger oder schmelzfähiger Polymere eingesetzt werden.

Vorzugsweise wird das erfindungsgemäße Verfahren jedoch zur Entgasung von thermoplastischen Polymeren eingesetzt. Diese Polymeren umfassen alle Kunststoffe, die unter dem Einfluß von Druck und Temperatur fließfähig werden. Beispielhaft sei hier Polycarbonat, Polystyrol, Polyphenylensulfid, Polyurethan, Polyamid, Polyester, Polyacrylat, Polymethacrylat, SAN-Harz und ihre Copolymeren genannt. Ganz besonders eignet sich das Verfahren zum Isolieren und Trocknen von Polycarbonatlösungen.

Polycarbonate, die mit dem erfindungsgemäßen Verfahren besonders vorteilhaft verarbeitet werden können, sind sowohl Homopolycarbonate als auch Copolycarbonate.

Die Polycarbonate können in grundsätzlich bekannter Weise linear oder verzweigt aufgebaut sein. Bis zu 80 Mol-%, vorzugsweise von 20 Mol-%, bis zu 50 Mol-% der Carbonat-Gruppen in den geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen unter dem Oberbegriff der thermoplastischen, aromatischen Polycarbonate subsumiert werden.

Einzelheiten der Herstellung von Polycarbonaten sind in vielen Patentschriften offenbart. Beispielhaft sei hier nur auf "Schnell Chemistry and Physics of Polycarbonates", Polymer Reviews, Volume 9, Interscience Publishers, New York, London, Sydney 1964, auf D.C. PREVORSEK, B.T. DEBONA and Y. KESTEN, Corporate Research Center, Allied Chemical Corporation, Morristown, New Jersey 07960, "Synthesis of Poly(estercarbonate) Copolymers" in Journal of Polymer Science, Polymer chemistry Edition, Vol. 19, 75-90 (1980), auf D. Freitag, U. Grigo, P.R. Müller, N. Nouvertne', Bayer AG, "Polycarbonates" in Encyclopedia of Polymer Science and Engineering, Volume 11, Second Edition, 1988, Seiten 648-718 und schließlich auf Dres. u. Grigo, K. Kircher und P.R. Müller "Polycarbonate" in Becker/Braun, Kunststoff-Handbuch, Band 3/1, Polycarbonate, Polyacetale, Polyester, Celluloseester, Carl-Hanser Verlag München, Wien 1992, Seiten 117-299 verwiesen.

Besonders bevorzugt werden mit dem erfindungsgemäßen Verfahren thermoplastische Polycarbonate mit einem mittleren Molekulargewicht Mᵥ (ermittelt durch Messung der relativen Viskosität bei 25°C in CH₂Cl₂ und einer Konzentration von0,5 g pro 100 ml CH₂Cl₂) von 12 000 bis 400 000, vorzugsweise von 18 000 bis 80 000 und insbesondere von 22 000 bis 60 000 behandelt.

Die flüchtigen Komponenten außer dem Lösungsmittel können sowohl nicht polymerisierte Monomere oder Oligomere als auch andere niedermolekulare Edukte sein.

Ein bei der Herstellung von thermoplastischen Polymeren, insbesondere von Polycarbonat häufig eingesetztes Lösungsmittel ist Methylenchlorid oder ein Gemisch aus Methylenchlorid und Chlorbenzol.

Das nach dem Verfahren von Lösungsmittel befreite Polymer hat im geschmolzenen Zustand insbesondere eine Viskosität von 100 bis 5000 Pas.

Die Wärmetauscher, insbesondere die Rohrbündelwärmetauscher weisen ein beliebiges, dem Fachmann grundsätzlich bekanntes Mittel zum Erhitzen der von Polymerlösung durchflossenen Kanäle oder Rohre auf eine Temperatur oberhalb der Verdampfungstemperatur der flüchtigen Komponenten auf. Diese Mittel sind z.B. Widerstandserhitzer oder ein Leitungsnetzwerk zum Transport einer Wärmetauscherflüssigkeit.

Alle von Polymerlösung bei Durchführung des erfindungsgemäßen Verfahrens berührten Teile, insbesondere der Wärmetauscher bzw. die Rohrbündelwärmetauscher können aus einem beliebigen metallischen Werkstoff gefertigt werden. Vorzugsweise werden jedoch diese Teile, insbesondere die Wärmetauscher aus einem eisenarmen Werkstoff mit einem Eisengehalt von höchstens 10% gefertigt. Besonders bevorzugt sind alle produktberührten Teile der Wärmetauscher aus Alloy 59 (2.4605), Inconell 686 (2.4606), Alloy-B2, Alloy-B3, Alloy B4, Alloy C-22, Alloy-C276, Alloy-C4 oder Alloy 625 gefertigt.

Bevorzugt ist ein Polymergranulat aus einer getrockneten Polymerlösung, insbesondere Polycarbonatlösung erhältlich nach dem erfindungsgemäßen Verfahren mit einem Gehalt an Restlösungsmitteln und Monomeren von höchstens 100 ppm, bevorzugt höchstens 55 ppm, besonders bevorzugt höchstens 30 ppm.

Besonders bevorzugt ist ein Polymergranulat bei dem das Monomer Bisphenol A ist und sein Gehalt im Polymer höchstens 5 ppm, bevorzugt höchstens 2 ppm, insbesondere bevorzugt höchstens 1 ppm beträgt.

Insbesondere bevorzugt ist ein Polymergranulat bei dem das Restlösungsmittel Methylenchlorid und/oder Chlorbenzol ist und sein Gehalt im Polymer höchstens 95 ppm, bevorzugt höchstens 50 ppm, besonders bevorzugt höchstens 25 ppm beträgt.

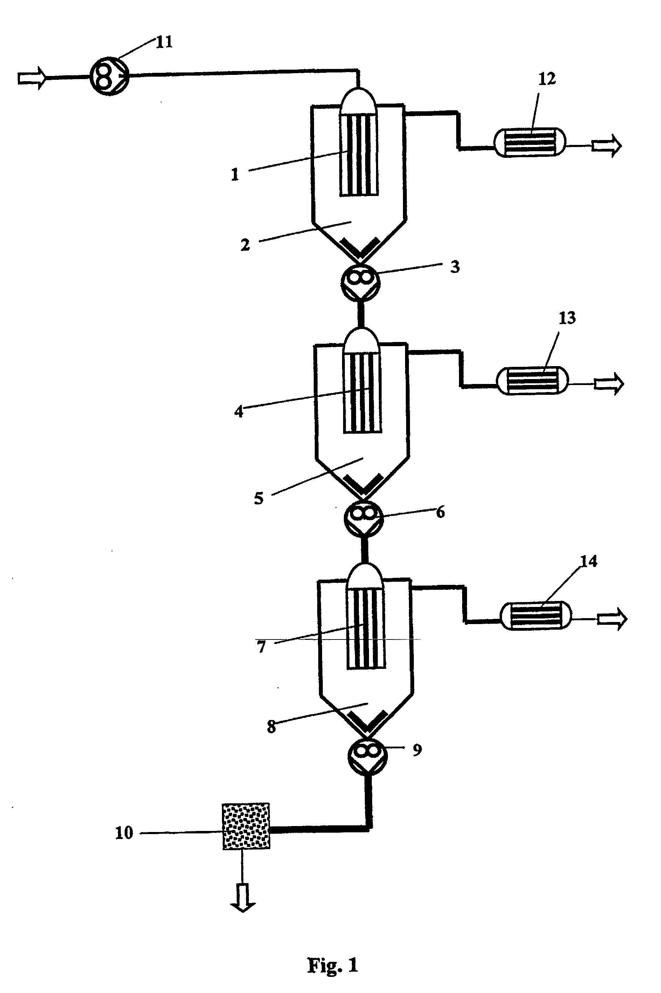

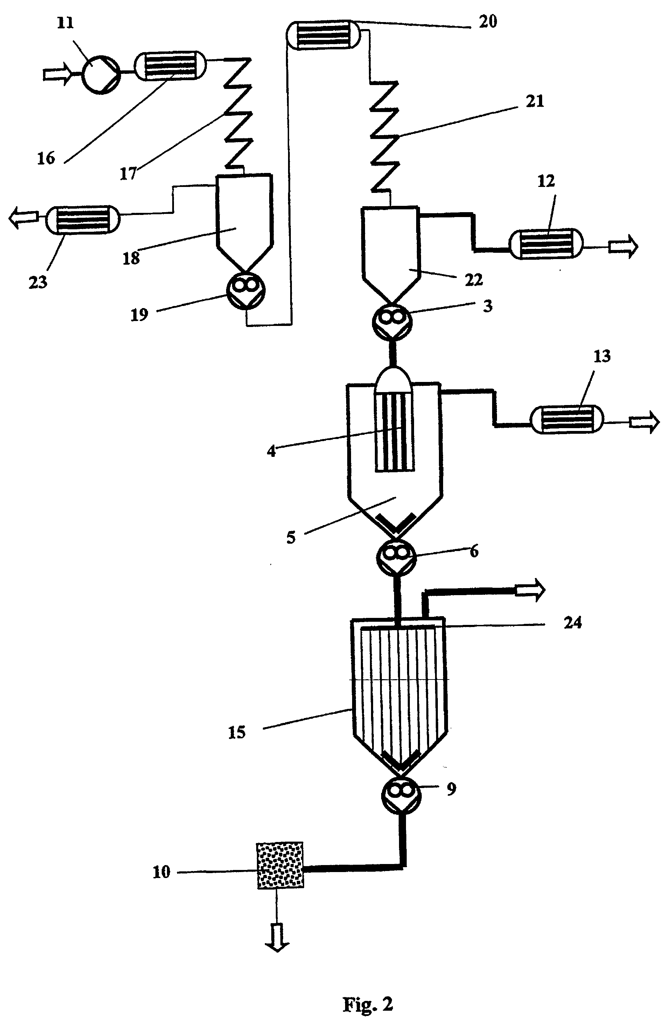

Die Erfindung wird nachstehend beispielhaft anhand der Figuren 1 und 2 erläutert, die zwei geeignete Anordnungen zur Durchführung des Verfahrens schematisch wiedergeben.

### Beispiele

Das erfindungsgemäße Verfahren wird am Verfahrensschema nach Figur 1 beispielhaft dargestellt. Eine Pumpe 11, z.B. eine Zahnrad-, Kreisel- oder Schraubenspindelpumpe, fördert die 5 bis 20 %ige Polymerlösung durch einen Rohrbündelwärmetauscher 1 in den Sumpf eines Abscheiders 2. Im Abscheider werden die leichterflüchtigen Komponenten abgetrennt und in einem Kondensator 12 kondensiert. Eine weitere Zahnradpumpe 3 fördert die aufkonzentrierte Polymerlösung (60 bis 75 Gew.-% Polymer) durch einen zweiten Rohrbündelwärmetauscher 4 in den Sumpf des zweiten Abscheiders 5. Die leichterflüchtigen Komponenten werden im Kondensator 13 kondensiert. Eine weitere Zahnradpumpe 6 fördert die 95 bis 99,9 Gew.-%ige Polymerlösung durch einen dritten Rohrbündelwärmetauscher 7 in den dritten Abscheider 8. Hier werden die leichterflüchtigen Komponenten im Kondensator 14 kondensiert. Die entgaste Polymerschmelze wird über eine Zahnradpumpe 9 einer Granuliereinrichtung 10 zugeführt.

### Beispiel 1

Bei diesem Beispiel wurde eine 15 Gew.-%ige Polycarbonatlösung erhalten aus einem Polycarbonatherstellungsverfahren unter Verwendung von BPA als Polymeren mit 42 Gew.-% Chlorbenzol und 43 Gew.-% Methylenchlorid in drei Schritten (Figur 1) mittels dreier hintereinander geschalteter Rohrbündelwärmetauscher 1, 4, 7 und jeweils zugehörigem Abscheider 2, 5, 8 aufkonzentriert. Die Polycarbonatlösung wurde in der ersten Stufe im ersten Rohrbündelwärmetauscher 1 auf 200°C erhitzt. Die Rohre wiesen einen Durchmesser von 20 mm auf und waren 4 m lang sowie aus Alloy 59 gefertigt. Der Durchsatz je Rohr betrugt 1kg/h. Der Druck im zugehörigen Abscheider 2 lag bei 0,1 MPa. Die aus dem Abscheider austretende Polymerlösung hatte einen Anteil von 65 Gew.-% Polycarbonat.

Die Polycarbonatlösung wurde in der zweiten Stufe im Rohrbündelwärmetauscher 4 auf 300°C erhitzt. Die Rohre wiesen einen Durchmesser von 10 mm auf und waren 2 m lang sowie aus Alloy 59 gefertigt. Der Durchsatz je Rohr betrug 5 kg/h. Der Druck im zugehörigen Abscheider 5 lag bei 0,1 MPa. Die aus dem zweiten Abscheider 5 austretende Polymerlösung hatte einen Anteil von 98,5 Gew.-% Polycarbonat.

Die Polycarbonatlösung wurde in der dritten Stufe im dritten Rohrbündelwärmetauscher 7 auf 320°C erhitzt. Die Rohre des Rohrbündelwärmetauschers wiesen einen Durchmesser von 20 mm auf und waren 0,5 m lang sowie aus Alloy 59 gefertigt. Der Durchsatz je Rohr betrug 5 kg/h. Der Druck im zugehörigen dritten Abscheider 8 lag bei 0,1 kPa.

Das aus dem dritten Abscheider austretende entgaste Polycarbonat der Polymerschmelze wies einen Gehalt an flüchtigen Verbindungen und Restlösungsmittel (im wesentlichen Chlorbenzol) von 50 ppm auf.

Nach dem Austritt aus dem dritten Abscheider 8 wurde die Polycarbonatschmelze in einer Granuliereinrichtung 10 direkt zu Granulat verarbeitet. Das Polycarbonat hatte eine Lösungsviskosität ηᵣₑₗ von 1,29 (gemessen bei 25°C in Methylenchlorid bei einer Konzentration von 5 g/l).

### Beispiel 2

Bei diesem Beispiel wurde eine 15 Gew.-%ige Polycarbonatlösung mit 42 Gew.-% Chlorbenzol und 43 Gew.-% Methylenchlorid in drei Schritten aufkonzentriert.

Die Polycarbonatlösung wurde in der ersten Stufe im ersten Rohrbündelwärmetauscher 1 auf 200°C erhitzt. Die Rohre wiesen einen Durchmesser von 10 mm auf und waren 4 m lang sowie aus Alloy 59 gefertigt. Der Rohrbündelwärmetauscher 1 wurde unter einem Druck von 20 bar betrieben. Dem Rohrbündelwärmetauscher 1 war ein Wendelrohrverdampfer (nicht gezeichnet) nachgeschaltet, der mit überhitztem Dampf (1,6 MPa) beheizt wurde. Der Druck im nachgeschalteten Abscheider 2 lag bei 0,1 MPa.

Die Polycarbonatlösung wurde in der zweiten Stufe im Rohrbündelwärmetauscher 4 auf 300°C erhitzt. Die Rohre wiesen einen Durchmesser von 10 mm auf und waren 2 m lang sowie aus Alloy 59 gefertigt. Der Durchsatz je Rohr betrug 5 kg/h. Der Druck im zugehörigen Abscheider 5 lag bei 5 KPa.

Die Polycarbonatlösung wurde in der dritten Stufe im Rohrbündelwärmetauscher 7 auf 320°C erhitzt. Die Rohre-wiesen-einen Durchmesser von 20 mm auf und waren 0,5 m lang sowie aus Alloy 59 gefertigt. Der Durchsatz je Rohr betrug 5 kg/h. Der Druck im zugehörigen Abscheider 8 lag bei 0,1 KPa.

Das entgaste Polycarbonat wies einen Chlorbenzolgehalt von 50 ppm auf.

### Beispiel 3

Auch bei diesem Beispiel wurde eine 15 Gew.-%ige Polycarbonatlösung mit 42 Gew.-% Chlorbenzol und 43 Gew.-% Methylenchlorid in drei Schritten aufkonzentriert.

Die Polycarbonatlösung wurde in der ersten Stufe im ersten Rohrbündelwärmetauscher 1 auf 200°C erhitzt. Die Rohre wiesen einen Durchmesser von 10 mm auf und waren 4 m lang sowie aus Alloy 59 gefertigt. Der Rohrbündelwärmetauscher 1 wurde unter einem Druck von 20 bar betrieben. Dem Rohrbündelwärmetauscher 1 war ein Wendelrohrverdampfer (nicht gezeichnet) nachgeschaltet, der mit überhitztem Dampf (1,6 MPa) beheizt wurde. Der Druck im nachgeschalteten Abscheider 2 lag bei 0,1 MPa.

Die Polycarbonatlösung wurde in der zweiten Stufe im Rohrbündelwärmetauscher 4 auf 300°C erhitzt. Die Rohre wiesen einen Durchmesser von 10 mm auf und waren 2 m lang sowie aus Alloy 59 gefertigt. Der Durchsatz je Rohr betrug 5 kg/h. Der Druck im zugehörigen Abscheider 5 lag bei 5 KPa.

Die Polycarbonatlösung wurde in der dritten Stufe im Unterschied zu Beispiel 2 in einem Strangverdampfer 24 (vergl. auch Fig. 2), der zur Verteilung der Polycarbonatschmelze mit einem Rohrverteiler bestückt ist, bei einer Temperatur von 320°C von restlichen, flüchtigen Bestandteilen befreit. Der Rohrverteiler wiederum wies über 1000 Bohrungen von 1mm Durchmesser auf und bildete eine Vielzahl von 6 m langen Polymersträngen aus, wobei der Durchsatz je Strang bei 70 g/h lag. Alle produktberührten Teile der Anlage waren aus Alloy 59 gefertigt. Das-gereinigte Polymermaterial wurde am Boden des Strangverdampfers entnommen und weiterverarbeitet. Der Druck im zugehörigen Abscheider 15 lag bei 0,1 KPa.

Das entgaste Polycarbonat wies einen Chlorbenzolgehalt von 25 ppm auf.

### Beispiel 4

Eine Verfahrensvariante wird am Verfahrensschema nach Figur 2 allgemein beispielhaft dargestellt. Eine Pumpe 11, eine Schraubenspindelpumpe, fördert die 5 bis 20 %ige Polymerlösung in zwei Stufen durch eine Kombination aus Wärmetauscher 16 und Schlangenrohrverdampfer 17 in den Sumpf eines Abscheiders 18. Im Abscheider 18 werden die leichterflüchtigen Komponenten abgetrennt und in einem Kondensator 23 kondensiert. Eine weitere Zahnradpumpe 19 fördert die Lösung durch einen zweiten Wärmetauscher 20 gefolgt von einem zweiten Schlangenrohrverdampfer 21 unter Abscheidung der flüchtigen Komponenten im Kondensator 12 in den Abscheider 22. Die nächste Zahnradpumpe 3 fördert die aufkonzentrierte Polymerlösung (60 bis 75 Gew.-% Polymer) durch einen Rohrbündelwärmetauscher 4 in den Sumpf des dritten Abscheiders 5. Die leichterflüchtigen Komponenten werden im Kondensator 13 kondensiert. Eine weitere Zahnradpumpe 6 fördert die 95 bis 99,9 Gew.-%ige Polymerlösung durch einen Rohrverteiler 24, der eine Vielzahl dünner Polymer-Stränge von 1 mm Durchmesser erzeugt, in den vierten Abscheider 8. Hier werden die leichterflüchtigen Komponenten abgesaugt. Die entgaste Polymerschmelze wird über eine Zahnradpumpe 9 einer Granuliereinrichtung 10 zugeführt.

Es wurde eine 15 Gew.-%ige Polycarbonatlösung erhalten aus einem Polycarbonatherstellungsverfahren unter Verwendung von BPA als Polymeren mit 42 Gew.-% Chlorbenzol und 43 Gew.-% Methylenchlorid in vier Schritten (entsprechend Figur 2) mittels der oben beschriebenen Verfahrensführung aufkonzentriert. Die Polycarbonatlösung wurde in den ersten zwei Stufen in den Wärmetauschern 16 und 20 auf 170 bzw. 220°C erhitzt. Die Rohre der Wärmetauscher 16, 20 wiesen einen Durchmesser von 10 mm auf und waren 4 m lang sowie aus Alloy 59 (Wärmetauscher 16) bzw. Inconell 686 (Wärmetauscher 20) gefertigt. Der Druck im zugehörigen Abscheider 18 lag bei 0,14 MPa und im Abscheider 22 bei 0,35 MPa. Die aus dem Abscheider 22 austretende Polymerlösung hatte einen Anteil von 65 Gew.-% Polycarbonat.

Die Polycarbonatlösung wurde in der dritten Stufe im Rohrbündelwärmetauscher 4 auf 300°C erhitzt. Die Rohre wiesen einen Durchmesser von 10 mm auf und waren 2 m lang sowie aus Alloy 59 gefertigt. Der Durchsatz je Rohr betrug 5 kg/h. Der Druck im zugehörigen Abscheider 5 lag bei 0,1 MPa. Die aus dem zweiten Abscheider 5 austretende Polymerlösung hatte einen Anteil von 98,5 Gew.-% Polycarbonat.

Die Polycarbonatlösung wurde in der vierten Stufe über einen Rohrverteiler 24 mit 1 mm-Bohrungen zur Erzeugung einer Vielzahl von Polymer-Strängen mit hoher Stoffaustauschfläche in den Abscheider 15 eingelassen. Die produktberührten Rohrleitungen und der Abscheider 15 waren aus Alloy 59 gefertigt. Der Druck im zugehörigen vierten Abscheider 15 betrug 0,1 kPa.

Das aus dem vierten Abscheider 15 austretende entgaste Polycarbonat der Polymerschmelze wies einen Gehalt an flüchtigen Verbindungen und Restlösungsmittel (im wesentlichen Chlorbenzol) von 50 ppm auf.

Nach dem Austritt aus dem vierten Abscheider 15 wurde die Polycarbonatschmelze in einer Granuliereinrichtung 10 direkt zu Granulat verarbeitet. Das Polycarbonatgranulat hatte eine Lösungsviskosität ηᵣₑₗ von 1,29 (gemessen bei 25°C in Methylenchlorid bei einer Konzentration von 5 g/l).

Der Restgehalt an Bisphenol-A (BPA) im granulierten Polycarbonat betrug ca. 5 ppm, gemessen über Gaschromatographie.

### Beispiel 5

Es wurde die gleiche Verfahrensfolge und Vorrichtung wie in Beispiel 4 verwendet. Jedoch wurde der Druck im Abscheider 5 auf 5 kPa gesenkt.

Mit dieser Maßgabe wurde aus dem Gesamtverfahren im Polycarbonatgranulat mit einem Restgehalt an BPA von nur noch 2 ppm erhalten. Der Chlorbenzolgehalt betrug 50 ppm.

### Beispiel 6

Mit der gleichen Verfahrensführung wie in Beispiel 5, jedoch einem Druck von 3 kPa im Abscheider 5 wurde ein Polycarbonat mit einem Restgehalt an BPA von 1 ppm erhalten. Der Chlorbenzolgehalt betrug 25 ppm.

## Patentansprüche

1. Mehrstufiges kontinuierliches Verfahren zum Eindampfen von Polymerlösungen, insbesondere thermoplastischer Polymere, durch indirekten Wärmeaustausch unter Durchleitung der Polymerlösung durch Rohrbündelwärmetauscher, mit nachgeschaltetem Abscheider, **dadurch gekennzeichnet, daß**
A) in einer ersten Stufe, in einem oder mehreren einzelnen Schritten die Polymerlösung mit einem Polymeranteil von 5 bis 20 Gew.-% in einer Kombination aus einem Rohrbündelwärmetauscher (1) und einem Dünnschichtverdampfer oder einem Schlangenrohrverdampfer oder in einem Rohrbündelwärmetauscher jeweils mit nachgeschaltetem Abscheider (2) bei einer Temperatur von 150 bis 250°C auf 60 bis 75 Gew.-% aufkonzentriert wird, wobei der Druck im Abscheider von etwa 0,1 bis 0,4 MPa beträgt,
B) in einer weiteren Stufe die Polymerlösung in einem Rohrbündelwärmetauscher (4) mit nachgeschaltetem Abscheider (5) bei einer Temperatur von 250 bis 350°C von 60 bis 75 Gew.-% auf mindestens 95 Gew.-%, insbesondere auf 98 bis 99,9 Gew.-% aufkonzentriert wird, wobei der Rohrbündelwärmetauscher (4) vertikale, beheizte gerade Rohre mit oder ohne eingebaute statische Mischer mit einem inneren Durchmesser von 5 bis 30 mm, vorzugsweise von 5 bis 15 mm, einer Länge von 0,5 bis 4 m, bevorzugt von 1 bis 2 m aufweist und der Durchsatz je Wärmetauscherrohr durch die Rohre 0,5 bis 10 kg/h, bevorzugt 3 bis 7 kg/h, bezogen auf das Polymer beträgt und wobei der Druck im Abscheider von 0,5 kPa bis 0,1 MPa, insbesondere von 3 kPa bis 0,1 MPa, bevorzugt von 3 kPa bis 10 kPa beträgt,
C) in einer weiteren Stufe die Reste von Lösungsmittel und/oder anderen flüchtigen Komponenten enthaltende Polymer in einem Rohrbündelwärmetauscher (7) mit nachgeschaltetem Abscheider (8) oder in einem Strangverdampfer mit Abscheider (15) bei einer Temperatur von 250 bis 350°C auf einen Gehalt an Lösungsmittel und/oder anderen flüchtigen Komponenten von 5 bis 500 ppm aufkonzentriert wird, wobei der Rohrbündelwärmetauscher vertikale, beheizte gerade Rohre mit einem inneren Durchmesser von 5 bis 30 mm, vorzugsweise von 10 bis 20 mm, einer Länge von 0,2 bis 2 m, bevorzugt von 0,5 bis 1 m aufweist und der Durchsatz je Wärmetauscherrohr durch die Rohre 0,5 bis 10 kg/h, bevorzugt 3 bis 7 kg/h, bezogen auf das Polymer, beträgt und wobei der Druck im Abscheider 15 von 0,05 kPa bis 0,1 MPa, bevorzugt 0,1 kPa bis 2 kPa beträgt, und
D) das entgaste Polymer anschließend isoliert und ggf. granuliert wird.

2. Verfahren gemäß Anspruch 1, **dadurch gekennzeichnet, daß** die erste Stufe A) in einem Rohrbündelwärmetauscher durchgeführt wird, der Wärmetauscherrohre für die Polymerlösung mit einem inneren Durchmesser von 5 bis 30 mm, vorzugsweise von 15 bis 25 mm und mit einer Länge von 0,5 bis 5 m, bevorzugt von 3 bis 4 m aufweist und wobei der Durchsatz durch die Wärmetauscherrohre je Rohr 0,5 bis 10 kg/h, bevorzugt 0,5 bis 3 kg/h bezogen auf das Polymer beträgt.

3. Verfahren gemäß Anspruch 1 oder 2, **dadurch gekennzeichnet, daß** die erste Stufe A) in einer Kombination aus einem Wärmetauscher und einem Schlangenrohrverdampfer durchgeführt wird, wobei der Wärmetauscher Wärmetauscherrohre für die Polymerlösung mit einem inneren Durchmesser von 5 bis 30 mm, vorzugsweise von 5 bis 15 mm und mit einer Länge von 0,5 bis 5 m, bevorzugt von 3 bis 4 m aufweist und wobei der Durchsatz durch die Wärmetauscherrohre je Rohr 0,5 bis 70 kg/h, bevorzugt 15 bis 25 kg/h bezogen auf das Polymer beträgt.

4. Verfahren nach einem der Ansprüche 1 bis 3, **dadurch gekennzeichnet, daß** die erste Stufe A in zwei Schritten in zwei aufeinanderfolgenden Kombinationen aus Wärmetauschern 16 bzw. 20 und Schlangenrohrverdampfern 17 bzw. 21 jeweils mit nachgeschaltetem Abscheider durchgeführt wird.

5. Verfahren gemäß einem der Ansprüche 1 bis 4, **dadurch gekennzeichnet, daß** alle von der Polymerlösung oder dem geschmolzenen Polymeren bei der Durchführung der Schritte A) bis C) berührten Teile der Trocknungsvorrichtung aus eisenarmem Werkstoff gefertigt sind.

6. Verfahren gemäß Anspruch 5, **dadurch gekennzeichnet, daß** der eisenarme Werkstoff einen Eisengehalt von höchstens 10 % aufweist.

7. Verfahren gemäß Anspruch 5, **dadurch gekennzeichnet, daß** der eisenarme Werkstoff ausgewählt ist aus der Reihe: Alloy 59 (2.4605), Inconell 686 (2.4606), Alloy 625, Alloy C-22, Alloy-C276, Alloy-C4, Alloy B2, Alloy B3, Alloy B4, vorzugsweise Alloy 59.

8. Verfahren gemäß den Ansprüchen 1 bis 7, **dadurch gekennzeichnet, daß** das Polymer der Polymerlösung ein thermoplastisches Polymer ausgewählt aus der Reihe: Polycarbonat, Polystyrol, Polyphenylensulfid, Polyurethan, Polyamid, Polyester, Polyacrylat, Polymethacrylat, ein SAN Harz oder ein Copolymer oder eine Mischung aus diesen Polymeren, insbesondere ein Polycarbonat ist.

9. Verfahren gemäß einem der Ansprüche 1 bis 8, **dadurch gekennzeichnet, daß** das Lösungsmittel Methylenchlorid oder ein Gemisch aus Chlorbenzol und Methylenchlorid ist.

10. Verfahren gemäß einem der Ansprüche 1 bis 9, wobei das granulierte Polymer einen Gehalt an Restlösungsmitteln und Monomeren von höchstens 100 ppm, bevorzugt höchstens 55 ppm, besonders bevorzugt höchstens 30 ppm aufweist .

11. Verfahren nach Anspruch 10, **dadurch gekennzeichnet, daß** das Polymer Polycarbonat ist.

12. Verfahren nach Anspruch 11, **dadurch gekennzeichnet, daß** das Monomer Bisphenol A ist und sein Gehalt im Polymer höchstens 5 ppm, bevorzugt höchstens 2 ppm, insbesondere bevorzugt höchstens 1 ppm beträgt.

13. Verfahren nach einem der Ansprüche 10 bis 12, **dadurch gekennzeichnet, daß** das Restlösungsmittel Methylenchlorid und/oder Chlorbenzol ist und sein Gehalt im Polymer höchstens 95 ppm, bevorzugt höchstens 50 ppm, besonders bevorzugt höchstens 25 ppm beträgt.

## Claims

1. Multistep continuous process for evaporating solutions of polymers, in particular of thermoplastic polymers, by indirect heat exchange, the polymer solution being passed through shell-and-tube heat exchangers, with a downstream separator, **characterised in that**
A) in a first step, in one or more individual steps, the polymer solution containing 5 to 20 wt.% of polymer is concentrated to 60 to 75 wt.% in a combination of a shell-and-tube heat exchanger (1) and a film evaporator or a coiled-tube evaporator or in a shell-and-tube heat exchanger, in each case with downstream separator (2), at a temperature of 150°C to 250°C, the pressure in the separator being from about 0.1 to 0.4 MPa,
B) in a further step, the polymer solution is concentrated from 60 to 75 wt.% to at least 95 wt.%, in particular to 98 to 99.9 wt.%, in a shell-and-tube heat exchanger (4) with downstream separator (5), at a temperature of 250°C to 350°C, the shell-and-tube heat exchanger (4) containing vertical, heated, straight tubes - with or without incorporated static mixers - having an internal diameter of from 5 to 30 mm, preferably of 5 to 15 mm, a length of from 0.5 to 4 m, preferably of 1 to 2 m, and the flow rate per shell-and-tube heat exchanger through the tubes being from 0.5 to 10 kg/h, preferably 3 to 7 kg/h, based on the polymer, and the pressure in the separator being from 0.5 kPa to 0.1 MPa, in particular from 3 kPa to 0.1 MPa, preferably from 3 kPa to 10 kPa,
C) in a further step, the rest of the polymer containing solvent and/or other volatile constituents is concentrated to a solvent content and/or content of other volatile constituents of 5 to 500 ppm in a shell-and-tube heat exchanger (7) with downstream separator (8) or in an extrusion evaporator with separator (15) at a temperature of 250°C to 350°C, the shell-and-tube heat exchanger containing vertical, heated, straight tubes having an internal diameter of from 5 to 30 mm, preferably of 10 to 20 mm, a length of from 0.2 to 2 m, preferably of 0.5 to 1 m, and the flow rate per shell-and-tube heat exchanger through the tubes being from 0.5 to 10 kg/h, preferably 3 to 7 kg/h, based on the polymer, and the pressure in the separator 15 being from 0.05 kPa to 0.1 MPa, preferably from 0.1 kPa to 2 kPa, and
D) the degassed polymer is subsequently isolated and optionally granulated.

2. Process according to claim 1, **characterised in that** the first step A) is carried out in a shell-and-tube heat exchanger, the tubes of the heat exchanger which contain the polymer solution have an internal diameter of from 5 to 30 mm, preferably of 15 to 25 mm, and a length of from 0.5 to 5 m, preferably of 3 to 4 m, and the flow rate through the tubes of the heat exchanger is 0.5 to 10 kg/h, preferably 0.5 to 3 kg/h, per tube, based on the polymer.

3. Process according to claim 1 or 2, **characterised in that** the first step A) is carried out in a combination of a heat exchanger and a coiled-tube evaporator, the heat exchanger contains heat-exchanging tubes for the polymer solution which have an internal diameter of from 5 to 30 mm, preferably of 5 to 15 mm, and a length of from 0.5 to 5 m, preferably of 3 to 4 m, and the flow rate through the tubes of the heat exchanger is 0.5 to 70 kg/h, preferably 15 to 25 kg/h, per tube, based on the polymer.

4. Process according to one of claims 1 to 3, **characterised in that** the first step A is carried out in two steps in two successive combinations of heat exchangers 16 and 20 respectively and coiled-tube evaporators 17 and 21 respectively, each with a downstream separator.

5. Process according to one of claims 1 to 4, **characterised in that** all parts of the drying device which come into contact with the polymer solution or with the molten polymer when steps A) to C) are being carried out are manufactured from a material low in iron.

6. Process according to claim 5, **characterised in that** the material which is low in iron has an iron content of 10% at most.

7. Process according to claim 5, **characterised in that** the material which is low in iron is selected from among: alloy 59 (2.4605), Inconell 686 (2.4606), alloy 625, alloy C22, alloy C276, alloy C4, alloy B2, alloy B3, alloy B4, preferably alloy 59.

8. Process according to claims 1 to 7, **characterised in that** the polymer of the polymer solution is a thermoplastic polymer selected from among: polycarbonate, polystyrene, polyphenylene sulfide, polyurethane, polyamide, polyester, polyacrylate, polymethacrylate, a SAN resin or a copolymer or a mixture of these polymers, in particular a polycarbonate.

9. Process according to one of claims 1 to 8, **characterised in that** the solvent is methylene chloride or a mixture of chlorobenzene and methylene chloride.

10. Process according to one of claims 1 to 9, wherein the granulated polymer has a content of residual solvents and monomers of at most 100 ppm, preferably at most 55 ppm, particularly preferably at most 30 ppm.

11. Process according to claim 10, **characterised in that** the polymer is polycarbonate.

12. Process according to claim 11, **characterised in that** the monomer is bisphenol A and its content in the polymer is at most 5 ppm, preferably at most 2 ppm, particularly preferably at most 1 ppm.

13. Process according to one of claims 10 to 12, **characterised in that** the residual solvent is methylene chloride and/or chlorobenzene and its content in the polymer is at most 95 ppm, preferably at most 50 ppm, particularly preferably at most 25 ppm.

## Revendications

1. Procédé continu multi-étapes pour l'évaporation de solutions polymères, en particulier de polymères thermoplastiques, par échange de chaleur indirect au cours du passage de la solution polymère à travers un échangeur de chaleur à faisceau tubulaire avec séparateur disposé en aval, **caractérisé en ce que** :
A)au cours d'une première étape, dans une ou plusieurs phase(s) individuelle(s), la solution polymère contenant une proportion de polymère de 5 à 20 % en poids est concentrée à une température de 150 à 250°C , à 60 à 75 % en poids, dans une combinaison constituée d'un échangeur de chaleur à faisceau tubulaire (1) et d'un évaporateur à couche mince ou d'un évaporateur à serpentin ou dans un échangeur de chaleur à faisceau tubulaire , dans chaque cas avec séparateur aval (2), la pression dans le séparateur étant d'environ 0,1 à 0,4 MPa,
B)au cours d'une deuxième étape, la solution polymère est concentrée dans un échangeur de chaleur à faisceau tubulaire (4) avec séparateur aval (5) à une température de 250 à 350 °C , de 60 à 75 % en poids à au moins 95 % en poids, en particulier de 98 à 99,9 % en poids, l'échangeur de chaleur à faisceau tubulaire (4) comportant des tubes droits chauffés, verticaux, avec ou sans mélangeur statique incorporé, d'un diamètre intérieur de 5 à 30 mm, de préférence de 5 à 15 mm, d'une longueur de 0,5 à 4 mètres, de préférence de 1 à 2 mètres, et le débit par tube d'échangeur de chaleur à travers les tubes étant de 0,5 à 10 kg/h, de préférence 3 à 7 kg/h, par rapport au polymère, et la pression dans le séparateur étant de 0,5 kPa à 0,1 MPa, en particulier de 3 kPa à 0,1 MPa, de préférence de 3 kPa à 10 kPa,
C)au cours d'une autre étape, le polymère contenant des restes de solvant et/ou d'autres composants volatils, est concentré dans un échangeur de chaleur à faisceau tubulaire (7) avec séparateur aval (8) ou dans un évaporateur à filaments avec séparateur (15) à une température de 250 à 350 °C, à une teneur en solvant et/ou autres composants volatils de 5 à 500 ppm, l'échangeur de chaleur à faisceau tubulaire comportant des tubes droits chauffés, verticaux, d'un diamètre intérieur de 5 à 30 mm, de préférence de 10 à 20 mm, d'une longueur de 0,2 à 2 mètre(s), de préférence de 0,5 à 1 mètre, et le débit par tube d'échangeur de chaleur à travers les tubes étant de 0,5 à 10 kg/h, de préférence 3 à 7 kg/h, par rapport au polymère, et la pression dans le séparateur 15 étant de 0,05 kPa à 0,1 MPa, de préférence 0,1 kPa à 2 kPa, et
D)le polymère dégazé est ensuite isolé et, le cas échéant, granulé

2. Procédé selon la revendication 1, **caractérisé en ce que** la première étape A) est effectuée dans un échangeur de chaleur à faisceau tubulaire qui comporte des tubes pour le passage de la solution polymère d'un diamètre intérieur de 5 à 30mm, de préférence de 15 à 25 mm et d'une longueur de 0,5 à 5 m , de préférence de 3 à 4 m, le débit à travers les tubes d'échangeur de chaleur par tube étant de 0,5 à 10 kg/h, de préférence 0,5 à 3 kg/h par rapport au polymère

3. Procédé selon la revendication 1 ou 2, **caractérisé en ce que** la première étape A) est effectuée dans une combinaison constituée d'un échangeur de chaleur et d'un évaporateur à serpentin, l'échangeur de chaleur comportant des tubes pour le passage de la solution polymère , d'un diamètre intérieur de 5 à 30 mm, de préférence de 5 à 15 mm et d'une longueur de 0,5 à 5m, de préférence de 3 à 4 m, et le débit dans les tubes d'échangeur de chaleur , par tube, étant, 0,5 à 70 kg/h, de préférence 15 à 25 kg/h par rapport au polymère

4. Procédé selon l'une quelconque des revendications 1 à 3, **caractérisé en ce que** la première étape A est effectuée en deux phases dans deux combinaisons successives d'échangeurs de chaleur 16 et 20 et d'évaporateurs à serpentin 17 et 21 , à chaque fois avec séparateur aval

5. Procédé selon l'une quelconque des revendications 1 à 4, **caractérisé en ce que** toutes les parties du dispositif de séchage en contact avec la solution polymère ou le polymère fondu lors de l'exécution des étapes A) à C) sont fabriquées en un matériau à faible teneur en fer

6. Procédé selon la revendication 5, **caractérisé en ce que** le matériau à faible teneur en fer présente une teneur en fer de 10 % au maximum

7. Procédé selon la revendication 5 , **caractérisé en ce que** le matériau à faible teneur en fer est choisi dans la série : Alliage 59 (2.4605), Inconell 686 (2.4606), Alliage 625, Alliage C-22, Alliage-C-276, Alliage-C4, Alliage B2, Alliage B3, Alliage B4 , de préférence Alliage 59

8. Procédé selon l'une quelconque des revendications 1 à 7 , **caractérisé en ce que** le polymère de la solution polymère est un polymère thermoplastique choisi dans la série : polycarbonate, polystyrène, sulfure de polyphénylène, polyuréthanne, polyamide, polyester, polyacrylate, polyméthacrylate, une résine SAN ou un copolymère ou un mélange de ces polymères, en particulier un polycarbonate

9. Procédé selon l'une quelconque des revendications 1 à 8, **caractérisé en ce que** le solvant est le chlorure de méthylène ou un mélange de chlorobenzène et de chlorure de méthylène

10. Procédé selon l'une quelconque des revendications 1 à 9, le polymère granulé présentant une teneur en solvants résiduels et monomères de 100 ppm au maximum, de préférence 55 ppm au maximum, particulièrement préférablement 30 ppm au maximum

11. Procédé selon la revendication 10, **caractérisé en ce que** le polymère est polycarbonate

12. Procédé selon la revendication 11, **caractérisé en ce que** le monomère est bisphénol A et sa teneur dans le polymère est au maximum de 5 ppm, de préférence au maximum de 2 ppm, particulièrement préférablement au maximum de 1 ppm

13. Procédé selon l'une des revendications 10 à 12 , **caractérisé en ce que** le solvant résiduel est du chlorure de méthylène et/ou du chlorobenzène et que sa teneur dans le polymère est au maximum de 95 ppm, de préférence au maximum de 50 ppm, et particulièrement préférablement de 25 ppm.
